(19) Europäisches Patentamt
European Patent Office
Office européen des brevets

(11) **EP 3 706 308 B1**

(12) **EUROPÄISCHE PATENTSCHRIFT**

(45) Veröffentlichungstag und Bekanntmachung des Hinweises auf die Patenterteilung:
**25.09.2024  Patentblatt 2024/39**

(21) Anmeldenummer: **20151582.2**

(22) Anmeldetag: **14.01.2020**

(51) Internationale Patentklassifikation (IPC):
**H02P 23/04** *(2006.01)*

(52) Gemeinsame Patentklassifikation (CPC):
**H02P 23/04; H02K 11/20; H02K 11/33**

(54) **VORRICHTUNG ZUR KONTINUIERLICHEN SCHWINGUNGSÜBERWACHUNG UND VERFAHREN**

CONTINUOUS VIBRATION MONITORING DEVICE AND METHOD

DISPOSITIF DE SURVEILLANCE CONTINUE DES VIBRATIONS ET PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.03.2019  DE 102019105692**

(43) Veröffentlichungstag der Anmeldung:
**09.09.2020  Patentblatt 2020/37**

(73) Patentinhaber: **ebm-papst Mulfingen GmbH & Co. KG
74673 Mulfingen (DE)**

(72) Erfinder:
• **BÜRKERT, Martin
  74677 Dörzbach-Hohebach (DE)**
• **MESSERSCHMIDT, Hartmut
  74653 Ingelfingen (DE)**
• **KNIPP, Christian Antonius
  71546 Aspach (DE)**

(74) Vertreter: **Staeger & Sperling
Partnerschaftsgesellschaft mbB
Sonnenstraße 19
80331 München (DE)**

(56) Entgegenhaltungen:
EP-A1- 1 972 793          WO-A1-2017/011568
WO-A2-2006/127939    WO-A2-2013/087708
DE-A1- 102010 019 494   DE-A1- 102011 101 599
DE-A1- 102016 119 826   DE-A1- 102017 107 384
DE-A1- 102017 207 418   DE-T2- 69 216 382
DE-T2- 69 714 102          DE-T5- 112017 001 119

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen Elektromotor mit einer Vorrichtung zur Schwingungsüberwachung.

Im Stand der Technik sind bereits diverse Verfahren bekannt, um Diagnosen zu Fertigungsmaschinen, Produktionsanlagen oder Motoren und deren zeitlichem Verhalten zu treffen. Die Anlagenverfügbarkeit einer rotierenden Maschine, wie z. B. eines Motors, Lüfters oder Ventilators stellt einen wichtigen Faktor für die wirtschaftliche Nutzung dieser Einrichtung dar.

Aus der DE 11 2017 001119 T ist ein Elektromotor mit einer Betriebsberechnungseinheit eines Mikrocomputers bekannt, die eine Steuerung in einer vorbestimmten Steuerungsperiode durchführt und die ein Betriebsverhältnis von einer an eine Spule eines Motors angelegten Spannung einer Soll-Drehzahl berechnet. Erzeugt wird ferner ein PWM-Signal zur Steuerung einer Inverterschaltung, basierend auf dem von der Betriebsberechnungseinheit ausgegebenen Rechtecksignal und den von einer elektrischen Winkel-Positionsinformationseinheit berechneten Positionsinformationen eines Rotors des Motors.

Aus der WO 2013/087708 A2 ist ein Verfahren zum Betreiben einer Flüssigkeitsring-Vakuumpumpe bekannt, bei dem Schwingungsmesswerte der Pumpe aufgenommen werden und mit einem vorgegebenen Kavitationsschwellwert verglichen werden.

Aus der Druckschrift EP 1 972 793 A1 ist ein Elektromotor mit den Merkmalen des Oberbegriffs des Anspruchs 1 bekannt geworden.

Die WO2006127939A2 offenbart eine Ermittlung von Drehzahlen bzw. Frequenzen, bei denen ausgeprägte Schwingungsamplituden auftreten, durch Betrieb des Motors bei unterschiedlichen Drehzahlen, und eine Begrenzung des Motorbetriebs auf Drehzahlen, bei denen keine unerlaubten Schwingungen auftreten.

Die Hauptaufgabe eines Verfahren zur Überwachung des Zustandes von insbesondere rotierenden oder drehbaren Maschinen und Motoren besteht darin, möglichst ohne Betriebsunterbrechung eine Beurteilung des aktuellen Maschinenzustandes, der Belastung der Maschine und jeglicher Veränderungen des Maschinenzustandes betreffend deren Schwingungsverhalten und Rundlauf zu ermöglichen. Unter Maschinenzustand versteht man dabei u. a. die Bewertung des Schwingungsverhaltens der Maschine auf der Basis bestimmter Betriebsparameter.

Bei Drehfeldmaschinen kann es zum Beispiel durch ungleichmäßige Masseverteilung zu einer umlaufenden radialen Kraftkomponente kommen, welche zu Vibrationen und Schwingungen (insbesondere bei bestimmten Drehzahlen) und erhöhtem Verschleiß der Maschine führt.

So sind beispielsweise Verfahren zur Überwachung von sich kontinuierlich bewegenden und/oder rotierenden Maschinenteilen, insbesondere von Maschinenlagern, durch Analyse von Schwingungsmustern mittels Sensoren bekannt. Die dafür notwendigen Schwingungsüberwachungssysteme messen die Vibration über einen längeren Zeitraum und geben zum Beispiel eine unmittelbare Fehlermeldung bei Grenzwertüberschreitung des Summenschwingungspegels an.

Nachteilig ist bei solchen Verfahren, dass einerseits erst beim konkreten Überschreiten von Grenzwertparametern lediglich eine Detektion erfolgt und andererseits auch schwer einzuschätzen ist, woher das geänderte Schwingungsverhalten stammt. Besonders nachteilig ist aber, dass man keinen unmittelbaren Einfluss auf das Regelverhalten des Motors nehmen kann, um die Schwingung, die ggf. durch Eigenschwingverhalten und nicht durch eine Unwucht entstanden sind, grundsätzlich zu eliminieren. So kommt es immer wieder vor, dass abhängig von Drehzahl und Last unerwünschte Schwingungen z. B. im Bereich der Eigenschwingungen bzw. der Resonanzfrequenzen bei bestimmten Drehzahlen entstehen.

Bekannte Lösungen basieren typischerweise auf dem Prinzip einer temporären Schwingungsanalyse mittels externer Elektronik. Hierbei wird neben der Sensorik zur Erfassung der Schwingung immer eine weitere Messeinrichtung zur Erfassung der Drehzahl benötigt. Des Weiteren erfolgt die Ansteuerung der elektrischen Maschine meist völlig unabhängig von der Elektronik zur Schwingungsanalyse und handelt es sich dabei um Komponenten ohne technische Wechselwirkung, die konkret dazu ausgelegt sind, eine Schwingung messtechnisch zu erfassen. Aufgrund der hohen Marktpreise solcher Geräte, werden diese Analyseeinheiten nicht dauerhaft installiert. Es werden zum Beispiel lediglich temporäre Messungen über bestimmte Zeitintervalle oder zu bestimmten Messzeitpunkten durchgeführt und diese analysiert. Hierbei ist zu berücksichtigen, dass bereits durch das Anbringen des Messequipments an die Drehfeldmaschine das Masse-Feder-System der Drehfeldmaschine beeinflusst werden kann und sich ein anderes Ergebnis als das Ergebnis ohne das Vorhandensein der Messeinrichtung ergibt.

Wurde die Schwingungsanalyse erfolgreich durchgeführt, so müssen weitere Maßnahmen durchgeführt werden und diese über einen externen oder internen Regler dem System zugeführt werden. Um dies zu erreichen, wird im Stand der Technik zum Beispiel eine gesonderte Anpassung bzw. Konvertierung der Daten durchgeführt, um diese Daten dann steuerungstechnisch verwerten zu können. Drehzahlhochläufe, welche für die Messung benötigt werden, müssen ferner separat vom Anwender gesteuert werden. Ist die Analyse abgeschlossen, ist zunächst unklar, wie man die Schwingung abstellen kann. Gegebenenfalls ist ein Austausch des Gerätes (Lüfter/Motor) oder ein Nacharbeiten (z.B. Auswuchten oder Versteifen der Struktur) notwendig.

Es ist ausgehend vom Stand der Technik daher Aufgabe der vorliegenden Erfindung, die vorbesagten Nachteile zu überwinden und eine Vorrichtung sowie ein Verfahren vorzuschlagen, welches eine einfache und zuverlässige Überwachung und Erkennung des Schwingungsverhaltens einer rotierenden Maschine bzw. Drehfeldmaschine ermöglichen, wobei insbesondere entsprechende Maßnahmen zur Vermeidung eines Schwingungsverhaltens vorgesehen sind.

Diese Aufgabe wird durch die in den unabhängigen Ansprüchen angegebenen Merkmale gelöst.

Ein Grundgedanke der vorliegenden Erfindung besteht darin, die Motorsteuerung selbst so zu konfigurieren, dass eine schwingungstechnische Analyse in der Motorsteuerung integral vorhanden ist und auf eine externe Sensorik vollkommen verzichtet werden kann.

Hierzu erfolgt die Integration der Schwingungssensorik direkt auf die Leiterplatte der Motorelektronik bzw. Elektronik der Drehfeldmaschine. Durch die Integration in die Motorelektronik sind eine kontinuierliche Schwingungsüberwachung und eine unmittelbare Anpassung von Steuerungsgrößen des Motors, wie zum Beispiel der Drehzahl des Motors, möglich.

Betriebsinformationen, wie beispielsweise die Drehzahl, werden aus der herkömmlichen Motorsteuerung ohnehin erhalten. Durch die Integration der Schwingungsüberwachung in die Motorelektronik lassen sich zuvor manuell angestoßene und ausgewertete Messungen (z. B. Drehzahlhochlauf für Resonanzermittlung) steuerungstechnisch voll automatisieren.

Mit der erfindungsgemäßen Vorrichtung zur insbesondere sensordiagnostischen Überwachung einer rotierenden Drehfeldmaschine wird es möglich, automatisch im laufenden Betrieb Zustandsinformationen über das Schwingungsverhalten der rotierenden Maschine, insbesondere einer dynamische Resonanzschwingung bei einer bestimmten Drehzahl zu erkennen und ggf. diese Drehzahl als unzulässige Drehzahl auszublenden aus dem Set oder Bereich von möglichen Betriebsdrehzahlen.

Erfindungsgemäß wird hierzu ein Elektromotor mit einem Stator und einem Rotor vorgeschlagen, ausgebildet mit einer Motorsteuerung zum Steuern der Rotation und der Drehzahl n des Rotors der Drehfeldmaschine, wobei die Motorsteuerung eine Schwingungssensorik integral aufweist, um Ist-Messwerte von Schwingungen der Drehfeldmaschine abhängig von der Drehzahl n zu erfassen.

Erfindungsgemäß ist es vorgesehen, dass die Motorsteuerung Mittel zur Analyse der Ist-Messwerte der mit der Schwingungssensorik erfassten Schwingungen integral aufweist. Dabei kann eine einzige Leiterplatte der Motorsteuerung alle elektronischen Bauelemente aufnehmen, die zur Steuerung und diagnostischen Überwachung des Schwingungsverhaltens des Motors erforderlich sind. Weiter Vorteilhaft ist es, wenn diese Motorsteuerung in das Motorgehäuse direkt integriert ist, so dass keine zusätzlichen (von außen zugeführten) Verbindungsleitungen von einer Sensorik zwischen Motor, Motorsteuerung und Analyseeinheiten erforderlich sind. Die gesamte Verbindungstechnik kann dann integral im Inneren des Motorgehäuses kompakt untergebracht werden.

In einer weiteren bevorzugten Ausgestaltung der Erfindung ist vorgesehen, dass die Mittel zur Analyse der Ist-Werte so konfiguriert sind, dass abhängig von hinterlegten Soll-Werten und Grenzwerten von der Motorsteuerung unzulässige Schwingungen bei den entsprechenden Drehzahlen erkannt werden. Dazu können bei einem Hochlauf des Motors diejenigen unzulässigen Drehzahlwerte detektiert und ausgewählt werden, bei denen unerwünschte oder unzulässige Schwingungen und Resonanzen auftreten und diese Drehzahlwerte im Systemspeicher hinterlegt werden, derart, dass die Motorsteuerung diese Drehzahlen als unzulässige Drehzahlen im Betrieb nicht ansteuert.

Ergänzend kann vorgesehen sein, dass unterhalb und oberhalb dem jeweiligen diskreten unzulässigen Drehzahlwert mittels der Schwingungsanalyse ein Drehzahlspektrum ermittelt wird, bei dem die auftretenden Schwingungen mindestens um einen bestimmten Faktor keiner als die unzulässigen Schwingungsamplitude sind, die bei der diskreten unzulässigen Drehzahl auftritt, wobei dieser so ermittelte Drehzahlbereich jeweils als unzulässiger Drehzahlbereich begrenzt von einem unteren Wert und einem oberen Wert ausgeklammert wird.

In einer weiteren bevorzugten Ausgestaltung der Erfindung ist vorgesehen, dass die Motorsteuerung wenigstens einen mit einem Schwingungssensor signaltechnisch gekoppelten Prozessor aufweist und die aus der Steuerungsanweisung erhaltenen Informationen zu Systemparametern verarbeitet, die dann zum Ansteuern des Motors im Betrieb verwendet werden.

Ein weiterer Aspekt der vorliegenden Erfindung betrifft ein Verfahren zum Betreiben eines solchen Elektromotors, wobei die Motorsteuerung konfiguriert ist, die Drehfeldmaschine mit den folgenden Betriebsbedingungen zu steuern:

i) Drehzahl n:

$$0 < n \leq n_{max}$$

(die Drehzahl muss kleiner als eine vorbestimmte maximal zulässige Drehzahl sein) und

ii)

$$n \neq n_{unz}$$

wobei $n_{unz}$ alle für den bestimmungsgemäßen Gebrauch nicht zugelassenen Drehzahlen darstellen und diese bei einem Hochlauf der Drehfeldmaschine (1) wie folgt ermittelt werden:

a) Erfassung der Ist-Messwerte des Schwingungsverhaltens mit der Schwingungssensorik beginnend vom Stillstand der Drehfeldmaschine durch kontinuierliche Erhöhung der Drehzahl n;

b) wobei die Motorsteuerung bei Detektieren eines unzulässigen Ist-Messwertes bei einer bestimmten Drehzahl $n_i$ im Vergleich zu den zulässigen Soll-Messwerten diese Drehzahl $n_i$ als unzulässige Drehzahl $n_{unz}$ für den bestimmungsgemäßen Betrieb der Drehfeldmaschine in einem Systemspeicher hinterlegt;

c) wobei das Erhöhen der Drehzahl n und die Maßnahmen aus Schritt b) solange wiederholt oder fortgeführt werden, bis die maximal zulässige Drehzahl $n_{max}$ erreicht wurde.

Als Hochlauf im Sinne der vorliegenden Erfindung wird dabei das Starten des Elektromotors aus dem Stillstand mit Erhöhen der Drehzahl verstanden. Dieser Messlauf kann einmal zu Beginn, sporadisch oder jedes Mal beim Hochfahren des Motors auf die Soll-Drehzahl durchlaufen werden. Altenativ kann der Messlauf auch jeweils beim Herunterfahren bzw. Herunterlauf erfasst werden. Dazu sind dann die geschilderten Schritte in der gegenläufigen Weise durchzuführen und wird die Drehzahl nicht erhöht, sondern verringert.

Ein weiterer Aspekt der vorliegenden Erfindung betrifft ein Verfahren zum Betreiben eines solchen Elektromotors, wobei die Motorsteuerung konfiguriert ist, die Drehfeldmaschine mit den folgenden Betriebsbedingungen zu steuern:

i) Drehzahl n:

$$0 < n \leq n_{max}$$

j)

$$n \neq n_{unz}$$

wobei $n_{unz}$ alle für den bestimmungsgemäßen Gebrauch nicht zugelassenen Drehzahlen darstellen und diese bei einem Hochlauf der Drehfeldmaschine (1) wie folgt ermittelt werden:

a) Erfassung der Ist-Messwerte des Schwingungsverhaltens mit der Schwingungssensorik (20) beginnend vom der maximalen Drehzahl oder einer Ist-Drehzahl der Drehfeldmaschine (1) durch kontinuierliches Verringern der Drehzahl n bis zum Stillstand;

b) wobei die Motorsteuerung (10) bei Detektieren eines unzulässigen Ist-Messwertes bei einer bestimmten Drehzahl $n_i$ im Vergleich zu den zulässigen Soll-Messwerten diese Drehzahl $n_i$ als unzulässige Drehzahl $n_{unz}$ für den bestimmungsgemäßen Betrieb der Drehfeldmaschine (1) in einem Systemspeicher hinterlegt;

c) wobei das Verringern der Drehzahl n und die Maßnahmen aus Schritt b) solange wiederholt oder fortgeführt werden, bis der Stillstand erreicht wurde.

So wird auch in einem fortgeschrittenen Betriebsstadium sicher gestellt, dass bestimmte Drehzahlen als unzulässige Drehzahlen für den bestimmungsgemäßen Betrieb erkannt und ausgeblendet werden. Es ist zum Beispiel denkbar, dass sich der Motor in seinem Betriebsverhalten durch Verschleiß oder andere Einflüsse ändert oder unerwünschte Schwingungen nach einer längeren Betriebszeit bei einer bestimmten Drehzahl auftreten, die bei der Inbetriebnahme des Motors unproblematisch waren. Somit wird eine kontinuierliche Überwachung des Schwingungsverhaltens über den gesamten Drehzahlbereich zulässiger Drehzahlen des Elektromotors realisiert.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen dabei:

Fig. 1   eine schematische Schaltungsskizze der erfindungsgemäßen Vorrichtung;

Fig. 2   eine schematische Darstellung des Prinzips der kontinuierlichen Schwingungsüberwachung und

Fig. 3   ein Ablaufdiagramm, welches den Messlauf demonstriert.

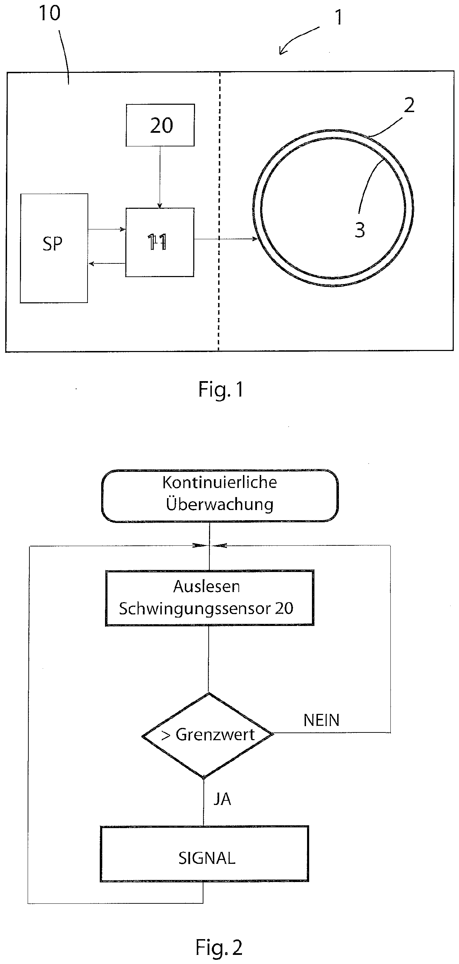

Im Folgenden wird die Erfindung mit Bezug auf die Figuren 1 bis 3 anhand eines Ausführungsbeispiels näher erläutert, wobei gleiche Bezugszeichen auf gleiche strukturelle und/oder funktionale Merkmale in den Figuren hinweisen.

In Fig. 1 ist eine schematische Schaltungsskizze der erfindungsgemäßen Vorrichtung, hier eines Elektromotors 1 gezeigt. Der Elektromotor 1 besitzt einen Rotor 2 und einen Stator 3. Ferner besitzt der Elektromotor 1 eine Motorsteuerung 10 zum Steuern der Drehzahl n des Rotors 2.

Die Motorsteuerung 10 weist eine Schwingungssensorik 20 integral auf, um Ist-Messwerte von Schwingungen des Elektromotors 1 abhängig von der Drehzahl n zu erfassen.

Mit SP sind die Systemparameter bezeichnet, mit denen die Motorsteuerung 10 den Betrieb des Motors 1 mit Hilfe eines Prozessors 11 steuert. Als Systemparameter SP sind beispielsweise die Drehzahl n und die maximal zulässige Drehzahl $n_{max}$ zu erwähnen. Ferner sind Systemparameter SP als Betriebsparameter hinterlegt, die aufgrund der Schwingungsanalyse erhalten wurden, wie Ausblendbereiche der Drehzahl, unzulässige Drehzahlen $n_{unz}$, unzulässige Schwingung.

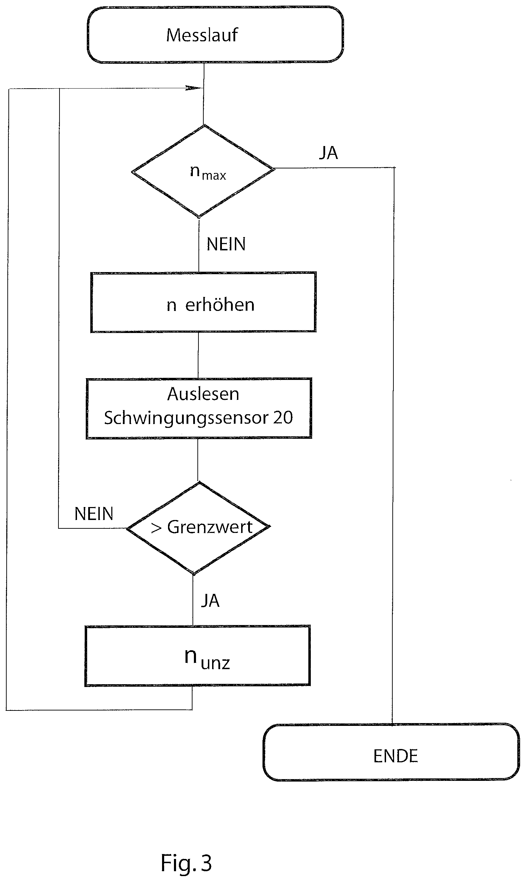

Die Figur 3 zeigt einen beispielhaften Messlauf, wie dieser mit der Idee der vorliegenden Erfindung umgesetzt werden kann.

Im ersten Schritt wird die Drehzahl n aus dem Stillstand nach dem Start des Motors 1 erhöht. Solange die Drehzahl n kleiner als die maximal zulässige Drehzahl $n_{max}$ ist, wird die Drehzahl solange weiter erhöht bis beim Auslesen des Schwingungssensors 20 ein unerwünschter Schwingungszustand detektiert wird. Sollte es zu keinem solchen Messereignis kommen, so wird der Motor 1 bis zur maximal zulässige Drehzahl $n_{max}$ hochgefahren und der Messlauf ist zu Ende, da keine störenden Schwingungszustände aufgetreten sind.

Sobald bei einer bestimmten Drehzahl $n_i$ ein zulässiger (hinterlegter) Grenzwert für den Schwingungszustand überschritten wurde, wird diese Drehzahl $n_i$ als unzulässige Drehzahl $n_{unz}$ gespeichert und wird die Schleife solange weiter gefahren und die Drehzahl n dabei weiter erhöht bis die maximal zulässige Drehzahl $n_{max}$ erreicht ist. Am Ende des gesamten Messlaufs stehen diejenigen Drehzahlen $n_{unz}$ fest, die für den Betrieb "auszublenden" sind.

In der Figur 2 ist der normale Betrieb des Motors 1 im Rahmen der kontinuierlichen Überwachung dargestellt. Der Schwingungssensor 20 überwacht den Betrieb und regelmäßig bzw. kontinuierlich werden die Daten des Schwingungssensors 20 von der Motorsteuerung 10 erfasst. Beim Überschreiten eines definierten Grenzwertes wird ein Signal erzeugt, das auf unterschiedliche Weise signaltechnisch verarbeitet werden kann. Beispielsweise kann eine Warnmeldung erfolgen oder ein Abschaltbefehl für den Motor 1. Alternativ kann die Motorsteuerung 10 die Drehzahl n gemäß einem Anpassungsbefehl solange anpassen, bis der Grenzwert wieder um einen bestimmten Faktor unterschritten wird.

**Patentansprüche**

1. Elektromotor mit einem Stator (3) und einem Rotor (2), mit einer Motorsteuerung (10) zum Steuern wenigstens der Rotation und der Drehzahl n des Rotors der Drehfeldmaschine (1), wobei die Motorsteuerung (10) eine Schwingungssensorik (20) integral aufweist, um Ist-Messwerte von auftretenden Schwingungen des Elektromotors (1) abhängig von der Drehzahl n zu erfassen, **dadurch gekennzeichnet, dass** die Motorsteuerung Mittel zur Analyse der Ist-Messwerte der mit der Schwingungssensorik (20) erfassten Schwingungen integral aufweist und die Mittel zur Analyse der Ist-Werte so konfiguriert sind, dass abhängig von hinterlegten Soll-Meßwerten und Grenzwerten von der Motorsteuerung (10) unzulässige Schwingungen bei den entsprechenden Drehzahlen n erkannt und/oder verarbeitet werden und die Motorsteuerung (10) wenigstens einen mit einem Schwingungssensor signaltechnisch gekoppelten Prozessor (11) aufweist.

2. Elektromotor gemäß Anspruch 1, **dadurch gekennzeichnet, dass** die Motorsteuerung (10) wenigstens eine oder genau eine Leiterplatte umfasst, auf der ein Schwingungssensor der Schwingungssensorik (20) montiert ist.

3. Elektromotor gemäß einem der Ansprüche 1 oder 2, **dadurch gekennzeichnet, dass** die Motorsteuerung (10) ausgebildet ist, abhängig von den Ist-Messwerten der Schwingungssensorik (20) bei einer oder mehreren bestimmter Drehzahlen $n_i$, diese Drehzahlen als für die Motorsteuerung unzulässige Drehzahlen $n_{unz}$ in einem Systemspeicher der Motorsteuerung (10) zu hinterlegen.

4. Elektromotor gemäß einem der Ansprüche 1 bis 3, **dadurch gekennzeichnet, dass** der Elektromotor ein Elektromotor eines Ventilators oder eines Lüfters ist.

5. Verfahren zum Betreiben eines Elektromotors gemäß einem der Ansprüche 1 bis 4, wobei die Motorsteuerung (10) konfiguriert ist, den Elektromotor mit den folgenden Betriebsbedingungen zu steuern:

    i) Drehzahl n:

$$0 < n \leq n_{max}$$

    ii)

$$n \neq n_{unz}$$

wobei $n_{unz}$ alle für den bestimmungsgemäßen Gebrauch nicht zugelassenen Drehzahlen darstellen und diese bei einem Hochlauf des Elektromotors wie folgt ermittelt werden:

    a) Erfassung der Ist-Messwerte des Schwingungsverhaltens mit der Schwingungssensorik (20) beginnend vom Stillstand des Elektromotors durch kontinuierliche Erhöhung der Drehzahl n;
    b) wobei die Motorsteuerung (10) bei Detektieren eines unzulässigen Ist-Messwertes bei einer bestimmten Drehzahl $n_i$ im Vergleich zu hinterlegten zulässigen Soll-Messwerten und Grenzwerten diese Drehzahl $n_i$ als unzulässige Drehzahl $n_{unz}$ für den bestimmungsgemäßen Betrieb des Elektromotors in einem Systemspeicher hinterlegt;

c) wobei das Erhöhen der Drehzahl n und die Maßnahmen aus Schritt b) solange wiederholt oder fortgeführt werden, bis die maximal zulässige Drehzahl $n_{max}$ erreicht wurde.

6. Verfahren zum Betreiben eines Elektromotors gemäß einem der Ansprüche 1 bis 4, wobei die Motorsteuerung (10) konfiguriert ist, den Elektromotor mit den folgenden Betriebsbedingungen zu steuern:

iii) Drehzahl n:

$$0 < n \leq n_{max}$$

iv)

$$n \neq n_{unz}$$

wobei $n_{unz}$ alle für den bestimmungsgemäßen Gebrauch nicht zugelassenen Drehzahlen darstellen und diese bei einem Hochlauf des Elektromotors wie folgt ermittelt werden:

d) Erfassung der Ist-Messwerte des Schwingungsverhaltens mit der Schwingungssensorik (20) beginnend vom der maximalen Drehzahl oder einer Ist-Drehzahl des Elektromotors durch kontinuierliches Verringern der Drehzahl n bis zum Stillstand;

e) wobei die Motorsteuerung (10) bei Detektieren eines unzulässigen Ist-Messwertes bei einer bestimmten Drehzahl $n_i$ im Vergleich zu hinterlegten zulässigen Soll-Messwerten und Grenzwerten diese Drehzahl $n_i$ als unzulässige Drehzahl $n_{unz}$ für den bestimmungsgemäßen Betrieb des Elektromotors in einem Systemspeicher hinterlegt;

f) wobei das Verringern der Drehzahl n und die Maßnahmen aus Schritt e) solange wiederholt oder fortgeführt werden, bis der Stillstand erreicht wurde.

**Claims**

1. An electric motor having a stator (3) and a rotor (2), having a motor control (10) for controlling at least the rotation and the rotational speed n of the rotor of the rotating field machine (1), wherein the motor control (10) comprises a printed circuit board and has an oscillation sensor of an oscillation sensor system (20) integrally mounted on the printed circuit board, in order to acquire actual measurement values of occurring oscillations of the electric motor depending on the rotational speed n, **characterized in that** the motor control integrally comprises means for the analysis of the actual measurement values of the oscillations acquired by means of the oscillation sensor system (20) and the means for the analysis of the actual values are configured so that, depending on stored target measurement values and limit values, unacceptable oscillations at the corresponding rotational speeds n are detected and/or processed by the motor control (10) and the motor control (10) comprises at least one processor (11) connected by signal technology to an oscillation sensor.

2. The electric motor according to Claim 1, **characterized in that** the motor control (10) comprises at least one or exactly one printed circuit board, on which an oscillation sensor of the oscillation sensor system (20) is mounted.

3. The electric motor according to any one of Claims 1 or 2, **characterized in that** the motor control (10) is configured for storing, depending on the actual measurement values of the oscillation sensor system (20) at one or multiple determined rotational speeds $n_i$, said rotational speeds as rotational speeds $n_{unz}$ which are unacceptable for the motor control, in a system memory of the motor control (10).

4. The electric motor according to any one of Claims 1 to 3, **characterized in that** the electric motor is an electric motor of a fan or of a blower.

5. A method for operating a electric motor according to any one of Claims 1 to 4, wherein the motor control (10) is configured to control the electric motor with the following operating conditions:

i) rotational speed n:

$$0 < n \leq n_{max}$$

ii)

$$n \neq n_{unz}$$

wherein $n_{unz}$ represent all the rotational speeds not acceptable for the use according to intended purpose and said rotational speeds are determined during a run-up of the electric motor as follows:

a) acquisition of the actual measurement values of the oscillation behavior with the oscillation sensor system (20), starting from a standstill of the electric motor, by continuous increasing of the rotational speed n;

b) wherein, when an unacceptable actual measurement value is detected at a certain rotational speed $n_i$, in comparison to stored acceptable target measurement values and limit values, the motor control (10) stores this rotational speed $n_i$ as unacceptable rotational speed $n_{unz}$ for the operation according to the intended purpose of the electric motor, in a system memory;

c) wherein the increasing of the rotational speed n and the measures from step b) are repeated or continued until the maximum acceptable rotational speed $n_{max}$ has been reached.

**6.** A method for operating an electric motor according to any one of Claims 1 to 4, wherein the motor control (10) is configured to control the electric motor with the following operating conditions:

    iii) rotational speed n:

$$0 < n \leq n_{max}$$

    iv)

$$n \neq n_{unz}$$

wherein $n_{unz}$ represent all the rotational speeds which are unacceptable for the use according to the intended purpose and these unacceptable rotating speeds are determined during a run-up of the electric motor as follows:

    d) acquisition of the actual measurement values of the oscillation behavior with the oscillation sensor system (20) starting from the maximum rotational speed or an actual rotational speed of the electric motor by continuous decreasing of the rotational speed n to a standstill;

    e) wherein, when an unacceptable actual measurement value is detected at a certain rotational speed $n_i$, in comparison to stored acceptable target measurement values and limit valeus, the motor control (10) stores this rotational speed $n_i$ as unacceptable rotational speed $n_{unz}$ for the operation according to the intended purpose of the electric motor, in a system memory;

    f) wherein the decrease of the rotational speed n and the measures from step b) are repeated or continued until a standstill has been reached.

## Revendications

**1.** Moteur électrique pourvu d'un stator (3) et d'un rotor (2), comprenant un dispositif de commande de moteur (10) pour commander au moins la rotation et la vitesse de rotation n du rotor du générateur à induction (1), dans lequel le dispositif de commande de moteur (10) présente de manière intégrale un système de capteurs de vibrations (20) afin de détecter des valeurs de mesure réelles des vibrations produites du moteur électrique (1) en fonction de la vitesse de rotation n,

**caractérisé en ce que** le dispositif de commande de moteur présente de manière intégrale des moyens pour analyser les valeurs de mesure réelles des vibrations détectées par le système de capteurs de vibrations (20), et les moyens d'analyse des valeurs réelles sont configurés de telle sorte qu'en fonction de valeurs de mesure de consigne sauvegardées et de valeurs limites, le dispositif de commande de moteur (10) identifie et/ou traite des vibrations inadmissibles aux vitesses de rotation n correspondantes, et le dispositif de commande de moteur (10) présente au moins un processeur (11) couplé en technique de signalisation à un capteur de vibrations.

**2.** Moteur électrique selon la revendication 1, **caractérisé en ce que** le dispositif de commande de moteur (10) comprend au moins une ou exactement une carte de circuits imprimés sur laquelle est monté un capteur de vibrations du système de capteurs de vibrations (20).

**3.** Moteur électrique selon l'une quelconque des revendications 1 ou 2, **caractérisé en ce que** le dispositif de commande de moteur (10) est réalisé pour sauvegarder dans une mémoire de système du dispositif de commande de moteur (10), en fonction des valeurs de mesure réelles du système de capteurs de vibrations (20) pour une ou plusieurs vitesses de rotation $n_i$ déterminées, ces vitesses de rotation comme des vitesses de rotation inadmissibles $n_{unz}$ pour le dispositif de commande de moteur.

**4.** Moteur électrique selon l'une quelconque des revendications 1 à 3, **caractérisé en ce que** le moteur électrique est un moteur électrique d'un ventilateur ou d'une soufflante.

**5.** Procédé permettant de faire fonctionner un moteur électrique selon l'une quelconque des revendications 1 à 4, dans lequel le dispositif de commande de moteur (10) est configuré pour commander le moteur électrique selon les conditions de fonctionnement suivantes :

    i) vitesse de rotation n :

$$0 < n \leq n_{max}$$

ii)

$$n \neq n_{unz}$$

où $n_{unz}$ représente toutes les vitesses de rotation non admises pour un usage conforme, et celles-ci sont établies lors d'une montée en régime du moteur électrique de la manière suivante :

    a) détecter les valeurs de mesure réelles du comportement de vibration à l'aide du système de capteurs de vibrations (20), en partant de l'arrêt du moteur électrique par une augmentation continue de la vitesse de rotation n ;
    b) dans lequel le dispositif de commande de moteur (10), lorsqu'une valeur de mesure réelle inadmissible à une vitesse de rotation déterminée $n_i$ est détectée en comparaison avec des valeurs de mesure de consigne admissibles sauvegardées et des valeurs limites, cette vitesse de rotation $n_i$ est sauvegardée dans une mémoire de système comme une vitesse de rotation inadmissible $n_{unz}$ pour le fonctionnement conforme du moteur électrique ;
    c) dans lequel l'augmentation de la vitesse de rotation n et les mesures de l'étape b) sont répétées ou poursuivies jusqu'à ce que la vitesse de rotation admissible maximale $n_{max}$ ait été atteinte.

6. Procédé permettant de faire fonctionner un moteur électrique selon l'une quelconque des revendications 1 à 4, dans lequel le dispositif de commande de moteur (10) est configuré pour commander le moteur électrique selon les conditions de fonctionnement suivantes :

    iii) vitesse de rotation n :

$$0 < n \leq n_{max}$$

iv)

$$n \neq n_{unz}$$

où $n_{unz}$ représente toutes les vitesses de rotation non admises pour un usage conforme, et celles-ci sont établies lors d'une montée en régime du moteur électrique de la manière suivante :

    d) détecter les valeurs de mesure réelles du comportement de vibration à l'aide du système de capteurs de vibrations (20), en partant de la vitesse de rotation maximale ou d'une vitesse de rotation réelle du moteur électrique par une diminution continue de la vitesse de rotation n jusqu'à l'arrêt ;
    e) dans lequel le dispositif de commande de moteur (10), lorsqu'une valeur de mesure réelle inadmissible à une vitesse de rotation déterminée $n_i$ est détectée en comparaison avec des valeurs de mesure de consigne admissibles sauvegardées et des valeurs limites, cette vitesse de rotation $n_i$ est sauvegardée dans une mémoire de système comme une vitesse de rotation inadmissible $n_{unz}$ pour le fonctionnement conforme du moteur électrique ;
    f) dans lequel la diminution de la vitesse de rotation n et les mesures de l'étape e) sont répétées ou poursuivies jusqu'à ce que l'arrêt ait été atteint.

10                  1

20

SP    11

2

3

**Fig. 1**

Kontinuierliche
Überwachung

Auslesen
Schwingungssensor 20

> Grenzwert     NEIN

JA

SIGNAL

**Fig. 2**

```
                    ┌─────────────────────┐
                    │      Messlauf       │
                    └─────────────────────┘
                               │
          ┌────────────────────┼──────────┐
          │                    │          │
          │                    ▼          │
          │                  ◇◇◇          │                JA
          │               ◇       ◇───────────────────────────┐
          │              ◇  n max   ◇                          │
          │               ◇       ◇                            │
          │                  ◇◇◇                               │
          │                    │                               │
          │                  NEIN                              │
          │                    │                               │
          │          ┌─────────────────────┐                  │
          │          │      n  erhöhen      │                  │
          │          └─────────────────────┘                  │
          │                    │                               │
          │          ┌─────────────────────┐                  │
          │          │      Auslesen        │                  │
          │          │ Schwingungssensor 20 │                  │
          │          └─────────────────────┘                  │
          │                    │                               │
          │   NEIN             ◇◇◇                             │
          └───────────────◇            ◇                       │
                           ◇ > Grenzwert ◇                     │
                            ◇            ◇                      │
                               ◇◇◇                             │
                                │                               │
                               JA                               │
                    ┌─────────────────────┐                    │
                    │       n unz         │                    │
                    └─────────────────────┘                    │
                                                                │
                                          ┌─────────────────────┐
                                          │        ENDE          │
                                          └─────────────────────┘
```

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 112017001119 T
- WO 2013087708 A2
- EP 1972793 A1
- WO 2006127939 A2